# EUROPEAN PATENT APPLICATION

(11) **EP 4 671 979 A1**
(43) Date of publication of application: **31.12.2025**
(21) Application number: 25158932.1
(22) Date of filing: 19.02.2025
(51) Int. Cl.: G06F 9/455, G06F 8/61

(54) **METHOD AND DEVICE FOR LOADING VIRTUAL MACHINE SNAPSHOT DATA**

(30) Priority: 28.06.2024 CN 202410869965
(71) Applicant: Beijing Volcano Engine Technology Co., Ltd., Beijing 100190 (CN)
(72) Inventor: She, Haibin, Chaoyang District, Beijing 100028 (CN); Zhang, Hequan, Chaoyang District, Beijing 100028 (CN); Zhao, Pengwei, Chaoyang District, Beijing 100028 (CN)
(74) Representative: Marks & Clerk LLP

(57) **Abstract**

A method and device for loading virtual machine snapshot data, the method comprising: in response to receiving startup instructions of multiple virtual machines, selecting (S201) target image files corresponding to multiple virtual machines from multiple image files stored in an image center, and caching multiple snapshot data in the target image files in the form of stripe data to multiple snapshot cache nodes in an elastic block storage EBS cluster according to a preset first stripe size; wherein the EBS cluster is configured with a snapshot distributed cache formed by multiple snapshot cache nodes for caching and distributing snapshot data; creating (S202) a data loading cloud disk corresponding to each virtual machine, and for each virtual machine, loading the snapshot data required to start the virtual machine from the snapshot storage space of multiple snapshot cache nodes through the data loading cloud disk corresponding to the virtual machine.

## Description

### FIELD

The present disclosure relates to the technical field of cloud computing, and in particular to a method and device for loading virtual machine snapshot data.

### BACKGROUND

Virtualization technology is the foundation of the cloud computing industry. There is a lot of flexible demand in current cloud computing services. For example, an ECS (Elastic Computing Service) cluster can quickly start a large number of virtual machines based on user demand.

In the prior art, a lazy loading technology can be used to clone snapshot data in batches to create a large number of virtual machines. When a certain snapshot data is needed during the virtual machine startup process, the virtual machine can be started directly without waiting for the snapshot data to be loaded into the cloud disk.

However, the inventors have found that the prior art has at least the following technical problems: since each virtual machine needs to read a snapshot data from the image center during the lazy loading process, the traffic for reading the snapshot data during the lazy loading process is greatly amplified, resulting in a lower loading speed of the snapshot data.

### SUMMARY

The embodiments of the present disclosure provide a method and device for loading virtual machine of snapshot data, which can improve the loading speed of snapshot data.

In a first aspect, an embodiment of the present disclosure provides a method for loading virtual machine snapshot data, comprising:
in response to receiving the startup instructions of multiple virtual machines, selecting target image files corresponding to the multiple virtual machines from the multiple image files stored in the image center, and caching multiple snapshot data in the target image files in the form of stripe data to multiple snapshot cache nodes in the elastic block storage EBS cluster according to a preset first stripe size; wherein the EBS cluster is configured with a snapshot distributed cache formed by multiple snapshot cache nodes to be responsible for caching and distributing snapshot data; and
creating a data loading cloud disk corresponding to each virtual machine, and for each virtual machine, loading the snapshot data required to start the virtual machine from the snapshot storage space of the multiple snapshot cache nodes through the data loading cloud disk corresponding to the virtual machine.

In a second aspect, an embodiment of the present disclosure provides a device for loading virtual machine snapshot data, comprising:
a cache unit, configured to, in response to receiving the startup instructions of multiple virtual machines, select target image files corresponding to the multiple virtual machines from multiple image files stored in an image center, and cache multiple snapshot data in the target image files in the form of stripe data to multiple snapshot cache nodes in an elastic block storage EBS cluster according to a preset first stripe size; wherein the EBS cluster is configured with a snapshot distributed cache formed by multiple snapshot cache nodes to be responsible for caching and distributing snapshot data; and
a loading unit, configured to create a data loading cloud disk corresponding to each virtual machine, and for each virtual machine, load the snapshot data required to start the virtual machine from the snapshot storage space of the multiple snapshot cache nodes through the data loading cloud disk corresponding to the virtual machine.

In a third aspect, an embodiment of the present disclosure provides an electronic device, comprising: a processor and a memory;
the memory stores computer-executable instructions;
the processor executes the computer-executed instructions stored in the memory, so that the at least one processor executes the method for loading virtual machine snapshot data as described in the first aspect and various possible designs of the first aspect.

In a fourth aspect, an embodiment of the present disclosure provides a computer-readable storage medium, in which computer execution instructions are stored, and when a processor executes the computer execution instructions, the method for loading virtual machine snapshot data as described in the first aspect and various possible designs of the first aspect is implemented.

In a fifth aspect, an embodiment of the present disclosure provides a computer program product, comprising a computer program, which, when executed by a processor, implements the method for loading virtual machine snapshot data as described in the first aspect and various possible designs of the first aspect.

The method and device for loading virtual machine snapshot data provided in this embodiment comprising: in response to receiving the startup instructions of multiple virtual machines, selecting target image files corresponding to multiple virtual machines from multiple image files stored in an image center, and caching multiple snapshot data in the target image files in the form of stripe data to multiple snapshot cache nodes in an elastic block storage EBS cluster according to a preset first stripe size; wherein the EBS cluster is configured with a snapshot distributed cache formed by multiple snapshot cache nodes to be responsible for caching and distributing snapshot data; and creating a data loading cloud disk corresponding to each virtual machine, and for each virtual machine, loading the snapshot data required to start the virtual machine from the snapshot storage space of multiple snapshot cache nodes through the data loading cloud disk corresponding to the virtual machine. In this technical solution, since the EBS cluster is configured with a snapshot distributed cache formed by multiple snapshot cache nodes to be responsible for caching and distributing snapshot data, when starting the multiple virtual machines, the snapshot data corresponding to the virtual machine can be cached through multiple snapshot cache nodes in the EBS cluster configuration, and the snapshot data is distributed to the data loading cloud disk corresponding to the virtual machine through multiple snapshot cache nodes in the EBS cluster configuration, so that the processing capacity of multiple snapshot cache nodes of the elastic block storage EBS cluster can be fully utilized, thereby improving the data loading speed.

### BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Obviously, the drawings described below are some embodiments of the present disclosure. For ordinary technicians in this field, other drawings can be obtained based on these drawings without paying creative labor.
FIG. 1 is a schematic diagram 1 of a method for loading virtual machine snapshot data provided by the prior art;
FIG. 2 is a flowchart 1 of a method for loading virtual machine snapshot data provided by an embodiment of the present disclosure;
FIG. 3 is a schematic diagram 1 of a method for loading virtual machine snapshot data provided by an embodiment of the present disclosure;
FIG. 4 is a second flowchart 2 of a method for loading virtual machine snapshot data provided by an embodiment of the present disclosure;
FIG. 5 is a second schematic diagram 2 of a method for loading virtual machine snapshot data provided by an embodiment of the present disclosure;
FIG. 6 is a schematic diagram of the structure of a device for loading virtual machine snapshot data provided by an embodiment of the present disclosure;
FIG. 7 is a schematic diagram of the structure of an electronic device provided by an embodiment of the present disclosure.

### DETAILED DESCRIPTION OF EMBODIMENTS

In order to make the purpose, technical solution and advantages of the embodiments of the present disclosure clearer, the technical solution in the embodiments of the present disclosure will be clearly and completely described below in conjunction with the drawings in the embodiments of the present disclosure. Obviously, the described embodiments are part of the embodiments of the present disclosure, not all of the embodiments. Based on the embodiments in the present disclosure, all other embodiments obtained by ordinary technicians in this field without creative work are within the scope of protection of the present disclosure.

Some terms of the embodiments of the present disclosure are explained below:
ECS (Elastic Computing Service) cluster: an elastic computing service provided by a cloud vendor, which can include multiple virtual machines.

EBS (Elastic Block Storage) cluster: an elastic block storage service provided by a cloud vendor, which may include multiple servers. In the disclosed embodiment, the EBS cluster may be an elastic block storage EBS cluster, which includes multiple snapshot cache nodes, and one snapshot cache node is also one server.

Availability Zone (AZ): A management unit for users' independent power and network resources in cloud computing, which can include multiple ECS clusters and multiple EBS clusters.

Region: A management unit of a single region in cloud computing, including multiple availability zones.

Cloud disk: A virtual block device provided by an EBS cluster, including an empty disk and a snapshot clone cloud disk. In this embodiment, the empty disk can be a snapshot copy storage cloud disk for storing snapshot copies. The snapshot clone cloud disk can be a data loading cloud disk corresponding to the virtual machine.

Cloud disk segment (DeviceSegment): A cloud disk can be divided into multiple cloud disk segments according to a fixed size. For example, a 128GB cloud disk can be divided into four 32GB cloud disk segments.

Snapshot: A value-added service of the EBS cluster that saves instantaneous data snapshots of the cloud disk on the object storage of the image center.

Snapshot Copy (SnapshotCopy): The storage format of snapshot data after it is downloaded to the EBS cluster.

Snapshot Segment (SnapshotSegment): A snapshot copy can be divided into multiple snapshot segments according to a fixed size. For example, a snapshot copy of 32GB can be divided into four 8GB snapshot segments.

Image: A single snapshot or a group of snapshots used to start a virtual machine. Data is stored in the format of snapshots.

Image Center (ImageCenter): A module responsible for managing images of multiple virtual machines in an ECS cluster.

Batch cloning: Creating cloud disks in batches through an image, and run virtual machine instances in batches based on the cloud disks.

Lazy loading (Lazyload): During creating a cloud disk and starting a virtual machine through an image, there is no need to wait for the image data to be loaded into the cloud disk. Instead, the virtual machine can be started directly by reading the data required for startup through the cloud disk.

There are a lot of flexible demand in the current cloud computing services. For example, the ECS (Elastic Computing Service) cluster can quickly start a large number of virtual machines according to user demand. In this way, users do not need to prepare a large number of virtual machine resources in advance, but only need to purchase computing resources when needed. Considering that users' businesses may have a large number of unpredictable business peaks, high requirements are placed on the flexibility of the ECS cluster, requiring that a large number of virtual machines can be created in a very short time.

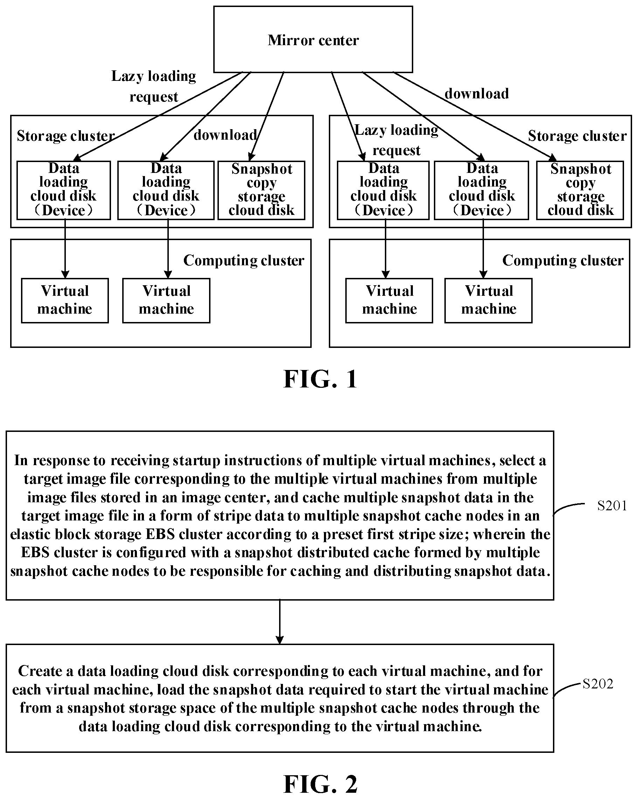

In the prior art, when creating a large number of virtual machines through batch cloning, it is a big problem to quickly clone cloud disks in batches through snapshots. In order to quickly clone a large number of cloud disks and start the virtual machines immediately, it is not advisable to wait for all snapshot data to be downloaded from the image center to the cloud disk before starting the virtual machine. Instead, you need to use lazy loading technology. When a piece of data is needed during the startup of the virtual machine, the virtual machine reads the snapshot data on demand through lazy loading technology. FIG. 1 is a technical diagram of cloud computing batch cloning multiple virtual machines through lazy loading technology.

As shown in Figure 1, the data flow process in snapshot data distribution is as follows:
1. The virtual machine (VM) in the computing cluster sends a request to read the snapshot data to the data loading cloud disk (Device) in the storage cluster (A lazy loading request in the figure)
2. The data loading cloud disk (Device) in the storage cluster sends a request to the image center (ImageCenter) to read the snapshot data.
3. The snapshot copy storage cloud disk in the storage cluster downloads the snapshot copy from the image center (ImageCenter).

When cloud computing uses lazy loading technology to clone multiple virtual machines in batches, the inventors found that the prior art has at least the following technical problems:
1. During the lazy loading process, each virtual machine needs to read a snapshot data, so the traffic for reading snapshot data during the lazy loading process is greatly amplified.
2. The snapshot data needs to be downloaded to the EBS cluster and stored in the format of a snapshot copy (SnapshotCopy). Each EBS cluster may need to download multiple copies of data, and the snapshot data traffic will also be greatly amplified.

For example, if an image batch 1,000 virtual machines (VMs), the snapshot data that needs to be read from the image center (ImageCenter) during the startup of the virtual machines (VMs) will be magnified 1,000 times, and multiple snapshot copies need to be downloaded from the image center (ImageCenter) to multiple EBS clusters. In this case, the traffic of the image center (ImageCenter) will become a bottleneck.

Aiming at the technical problems in the prior art, the inventors have the following technical ideas: a layer of independent lazy loading distributed cache is formed in the EBS cluster, which is responsible for distributing and caching snapshot data. The loading snapshot data of the snapshot lazy loading and the downloading snapshot data of the snapshot copy are all read from the layer of distributed cache. Through the independent lazy loading distributed cache, stripes can be broken up efficiently, so that the processing power of all nodes of EBS cluster can be fully utilized and the data loading speed can be improved.

Accordingly, the specific steps may comprise: first, in response to receiving the startup instructions of multiple virtual machines, selecting target image files corresponding to multiple virtual machines from multiple image files stored in the image center, and cache multiple snapshot data in the target image files in the form of stripe data to multiple snapshot cache nodes in the elastic block storage EBS cluster according to the preset first stripe size; wherein the EBS cluster is configured with a snapshot distributed cache formed by multiple snapshot cache nodes to be responsible for caching and distributing snapshot data. Then, creating a data loading cloud disk corresponding to each virtual machine, and for each virtual machine, loading the snapshot data required to start the virtual machine from the snapshot storage space of multiple snapshot cache nodes through the data loading cloud disk corresponding to the virtual machine.

In this technical solution, the EBS cluster is configured with a snapshot distributed cache formed by multiple snapshot cache nodes to be responsible for caching and distributing snapshot data. When multiple virtual machines are started, the snapshot data corresponding to the virtual machines can be cached through the multiple snapshot cache nodes in the EBS cluster configuration, and the snapshot data can be distributed to the data loading cloud disk corresponding to the virtual machine through the multiple snapshot cache nodes in the EBS cluster configuration, so that the processing power of the multiple snapshot cache nodes of the elastic block storage EBS cluster can be fully utilized, thereby improving the data loading speed.

The following is a specific implementation process of the method and device for loading virtual machine snapshot data involved in the embodiment of the present disclosure, some examples are only for example and not for limitation. The execution subject of the method for loading virtual machine snapshot data involved in the embodiment of the present disclosure is an electronic device, which can be a terminal, a server, etc.

FIG. 2 is a flowchart 1 of a method for loading virtual machine snapshot data provided by an embodiment of the present disclosure. As shown in FIG. 2, the method for loading virtual machine snapshot data may comprise:
201. In response to receiving startup instructions of multiple virtual machines, select a target image file corresponding to multiple virtual machines from multiple image files stored in an image center, and cache multiple snapshot data in the target image files in the form of stripe data in multiple snapshot cache nodes in an elastic block storage EBS cluster according to a preset first stripe size; wherein the EBS cluster is configured with a snapshot distributed cache formed by multiple snapshot cache nodes to be responsible for caching and distributing snapshot data.

In the embodiment of the present disclosure, the multiple snapshot data in the target image file may be of a fixed size, for example, each snapshot data is 2 MB.

Among them, the preset first stripe size can be set independently to indicate the size of the stripe data stored in the snapshot cache node. Exemplarily, the first stripe size can be 32KB, and the snapshot data is 2MB. The 2MB snapshot data is distributed in the form of stripe data in 64 snapshot cache nodes, for each of which in such case, a 2MB snapshot data includes stripe data groups of 32KB*64. If a 2MB snapshot data needs to be read, 32KB of snapshot data needs to be read from each snapshot cache node.

In the disclosed embodiment, snapshot data is cached in the form of stripe data to multiple snapshot cache nodes in the elastic block storage EBS cluster. Multiple snapshot cache nodes only need to download data from the mirror center once, which greatly reduces the frequency of cloud disk access to the mirror center.

It should be noted that the EBS cluster is configured with a snapshot distributed cache formed by multiple snapshot cache nodes to be responsible for caching and distributing snapshot data. Snapshot storage space for caching snapshot data can be configured in each snapshot cache node in the elastic block storage EBS cluster, so that multiple snapshot cache nodes form an independent snapshot distributed cache in the elastic block storage EBS cluster.

In the disclosed embodiment, the plurality of snapshot cache nodes may be all snapshot cache nodes in the elastic block storage EBS cluster, or may be part of the snapshot cache nodes in the elastic block storage EBS cluster. It should be noted that in order to realize that a single snapshot can utilize the processing power of the entire cluster storage node, the plurality of snapshot cache nodes are generally close to or the same as the cluster scale. Exemplarily, the number of the plurality of snapshot cache nodes is 64, and these 64 nodes are all the snapshot cache nodes in the elastic block storage EBS cluster.

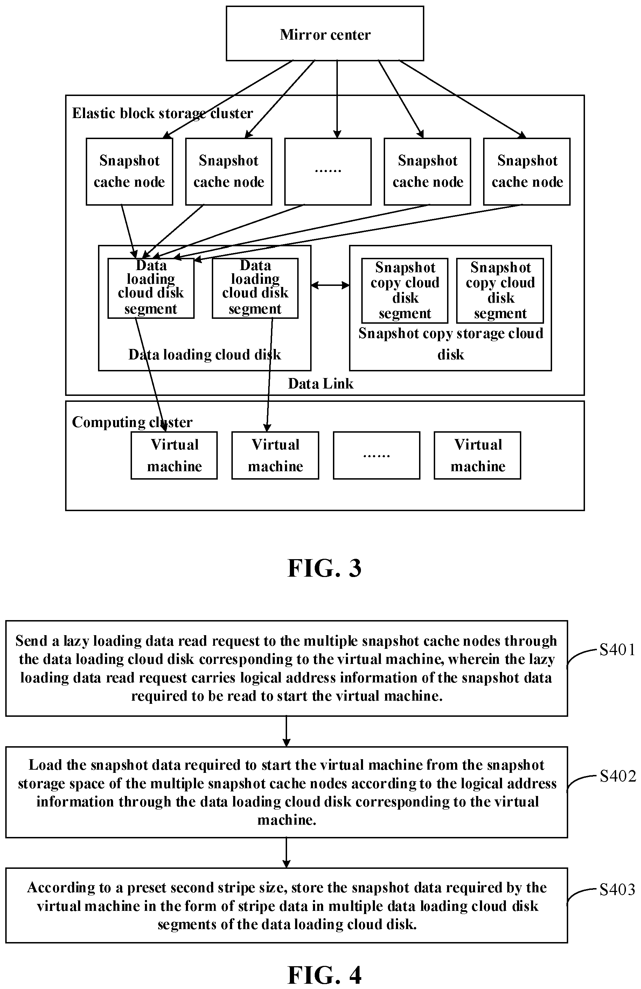

In some embodiments, as shown in FIG3, a snapshot storage space shared by all snapshots is established in each snapshot cache node, and the snapshot data can be cached from the image center through the snapshot storage space. The data loading cloud disk corresponding to each virtual machine can read the snapshot data from the snapshot cache node instead of reading the snapshot data from the image center, thereby reducing the frequency of cloud disk access to the image center.

It should be noted that in the embodiments of the present disclosure, the number of multiple snapshot cache nodes and the value of snapshot storage space in the elastic block storage EBS cluster are not specifically limited and can be set and modified as needed. For example, the number of multiple snapshot cache nodes is 64, and a 4GB snapshot storage space is established in each snapshot cache node. The 64 snapshot cache nodes can cache a maximum of 256GB of snapshot data.

202. Create a data loading cloud disk corresponding to each virtual machine. For each virtual machine, load the snapshot data required to start the virtual machine from the snapshot storage space of multiple snapshot cache nodes through the data loading cloud disk corresponding to the virtual machine.

In the disclosed embodiment, one virtual machine corresponds to one data loading cloud disk. For each virtual machine, the snapshot data required to start the virtual machine can be loaded from multiple snapshot cache nodes through the data loading cloud disk corresponding to the virtual machine, thereby completing the startup of multiple virtual machines.

In this case, since the snapshot data is cached in the form of stripe data to multiple snapshot cache nodes in the elastic block storage EBS cluster, when reading the snapshot data, the data can be loaded from multiple snapshot cache nodes. By utilizing the data loading capabilities of multiple snapshot cache nodes, the problem of local overheating of access traffic is solved.

For example, 1,000 virtual machines are started in batches and 1,000 data loading cloud disks are created. The snapshot data is distributed in 64 snapshot cache nodes in the form of stripe data. Among them, the download speed of each snapshot cache node is 1 GB/s. The read and write speed of each data loading cloud disk is 30 MB/s.

If 1000 data loaders access data in the 2MB logical address range at the same time, the required read and write speed for the 1000 data loading disks is: 30MB/s* 1000=30GB/s. The total loading speed that 64 snapshot cache nodes can provide is: 1GB/s*64=64GB/s. It can be seen that in the extreme scenario of centralized access to 2MB logical address snapshot data, by utilizing the data loading capacity of 64 snapshot cache nodes, the traffic will not have bottlenecks, thus solving the problem of local overheating of access traffic.

The disclosed embodiment provides a method for loading virtual machine snapshot data: in response to receiving the startup instructions of multiple virtual machines, selecting target image files corresponding to multiple virtual machines from multiple image files stored in an image center, and caching multiple snapshot data in the target image files in the form of stripe data to multiple snapshot cache nodes in an elastic block storage EBS cluster according to a preset first stripe size; wherein the EBS cluster is configured with a snapshot distributed cache formed by multiple snapshot cache nodes to be responsible for caching and distributing snapshot data; and creating a data loading cloud disk corresponding to each virtual machine, and for each virtual machine, loading the snapshot data required to start the virtual machine from the snapshot storage space of multiple snapshot cache nodes through the data loading cloud disk corresponding to the virtual machine. In this technical solution, since the EBS cluster is configured with a snapshot distributed cache formed by multiple snapshot cache nodes to be responsible for caching and distributing snapshot data, when starting multiple virtual machines, the snapshot data corresponding to the virtual machine can be cached through multiple snapshot cache nodes in the EBS cluster configuration, and the snapshot data is distributed to the data loading cloud disk corresponding to the virtual machine through multiple snapshot cache nodes in the EBS cluster configuration, so that the processing capacity of multiple snapshot cache nodes of the elastic block storage EBS cluster can be fully utilized, thereby improving the data loading speed.

FIG. 4 is a second flow chart of a method for loading virtual machine snapshot data provided in an embodiment of the present disclosure. In the embodiment of the present disclosure, taking a data loading request as a lazy loading data reading request as an example, a method for loading snapshot data required to start a virtual machine from snapshot storage space of multiple snapshot cache nodes through a data loading cloud disk corresponding to the virtual machine in S203 is described in detail. As shown in FIG. 4, the method may comprise:
S401. Sending a lazy loading data read request to multiple snapshot cache nodes through the data loading cloud disk corresponding to the virtual machine. The lazy loading data read request carries the logical address information of the snapshot data required to be read to start the virtual machine.

In the disclosed embodiment, the lazy loading data read request may also carry the size information of the snapshot data to be read. For example, the logical address information of the snapshot data carried in the lazy loading data read request is: offsetXXX and the size information is 2MB.

S402. Loading the snapshot data required to start the virtual machine from the snapshot storage space of multiple snapshot cache nodes according to the logical address information through the data loading cloud disk corresponding to the virtual machine.

In the embodiment of the present disclosure, a plurality of data and the logical address information corresponding to each data are stored in the snapshot storage space of the snapshot cache node. The data loading cloud disk corresponding to the virtual machine can determine the snapshot data to be read according to the logical address information.

S403. According to a preset second stripe size, storing the snapshot data required by the virtual machine in the form of stripe data to multiple data loading cloud disk segments of the data loading cloud disk.

In the disclosed embodiment, the data loading cloud disk may be 128 GB, and the data loading cloud disk includes 4 data loading cloud disk segments, each of which is 32 GB.

It should be noted that the second stripe size is used to indicate the size of the stripe data stored in the data loading cloud disk segment. For example, the second stripe size is 64KB, and the number of multiple data loading cloud disk segments is 4. At this time, the snapshot data can be evenly distributed in the 4 data loading cloud disk segments, and the form of the stripe data corresponding to the snapshot data is 64KB*4.

Among them, since the size of the stripe data stored in the data loading cloud disk segment is completely decoupled from the size of the stripe data stored in the snapshot cache node, the flexibility of data storage is improved.

In the disclosed embodiment, the lazy load data read request (lazyload IO) of the cloud disk and the download of the snapshot copy can share the snapshot data distribution traffic provided by multiple snapshot cache nodes. Accordingly, the method also comprises: in the process of starting multiple virtual machines, creating at least one snapshot copy storage cloud disk corresponding to the multiple virtual machines; for each snapshot copy storage cloud disk, loading the target image files corresponding to the multiple virtual machines from the snapshot storage space of the multiple snapshot cache nodes; according to the preset second stripe size, storing the multiple snapshot data in the target image files in the form of stripe data in the multiple snapshot copy cloud disk segments of the snapshot copy storage cloud disk.

Among them, the size of the stripe data stored in the snapshot copy cloud disk segment is the same as the size of the stripe data stored in the data loading cloud disk segment, so that the data loading cloud disk can read the snapshot data from the snapshot copy stored in the snapshot copy storage cloud disk.

In some embodiments, as shown in FIG. 3, the method also comprises: configuring the number of multiple snapshot copy cloud disk segments in the snapshot copy storage cloud disk to be consistent with the number of multiple data loading cloud disk segments in the data loading cloud disk; and establishing a data link between the snapshot copy storage cloud disk and the multiple data loading cloud disks, wherein the data link is used for the data loading cloud disk to read the snapshot data corresponding to the read and write request from the snapshot copy stored in the snapshot copy storage cloud disk when the read and write request sent by the virtual machine is received.

It should be noted that a snapshot copy storage cloud disk can receive read and write requests from multiple data loading cloud disks, wherein the number of snapshot copy storage cloud disks is proportional to the number of multiple data loading cloud disks.

Exemplarily, the number of data loading cloud disks is 1000; one snapshot copy storage cloud disk can receive read and write requests from 200 data loading cloud disks, and then 5 snapshot copy storage cloud disks need to be created.

Among them, the data loading speed of the snapshot copy storage cloud disk is 1GB/s. If 1000 data loading cloud disks and 5 snapshot copy storage cloud disks access data within the 2MB logical address range at the same time, the required read and write speed of the 1000 data loading cloud disks is: 30MB/s* 1000=30GB/s. The required read and write speed of the 5 snapshot copy storage cloud disks is: 1GB/s*5=5GB/s. The total loading speed that 64 snapshot cache nodes can provide is: 1GB/s*64=64GB/s.

It can be seen that by utilizing the data loading capabilities of 64 snapshot cache nodes, there will be no traffic bottleneck when the lazy load data read request (lazyload IO) of the cloud disk and the download of snapshot copies share the snapshot data distribution traffic provided by multiple snapshot cache nodes.

One point that needs to be explained is that in the disclosed embodiment, the snapshot copy storage cloud disk is used to specifically store the snapshot copy, so that the snapshot cache node can only be responsible for providing the download of the snapshot segment, and is not responsible for the storage of the snapshot segment. In this case, if the snapshot cache node fails, it is no longer necessary to schedule the storage of the snapshot copy, thereby greatly reducing the delayed burr of the data read and write request sent by the data loading cloud disk to the snapshot cache node during the snapshot cache node downtime.

In some embodiments, loading snapshot data required to start the virtual machine from snapshot storage space of multiple snapshot cache nodes through a data loading cloud disk corresponding to the virtual machine comprises: if a data loading request sent to a first snapshot cache node through the data loading cloud disk corresponding to the virtual machine times out, through a data loading request sent by the data loading cloud disk corresponding to the virtual machine to a second snapshot cache node, loading the snapshot data required for starting the virtual machine from the snapshot storage space of the second snapshot cache node;
wherein the first snapshot cache node is a snapshot cache node that fails among the multiple snapshot cache nodes, and the second snapshot cache node is other snapshot cache nodes except the first snapshot cache node.

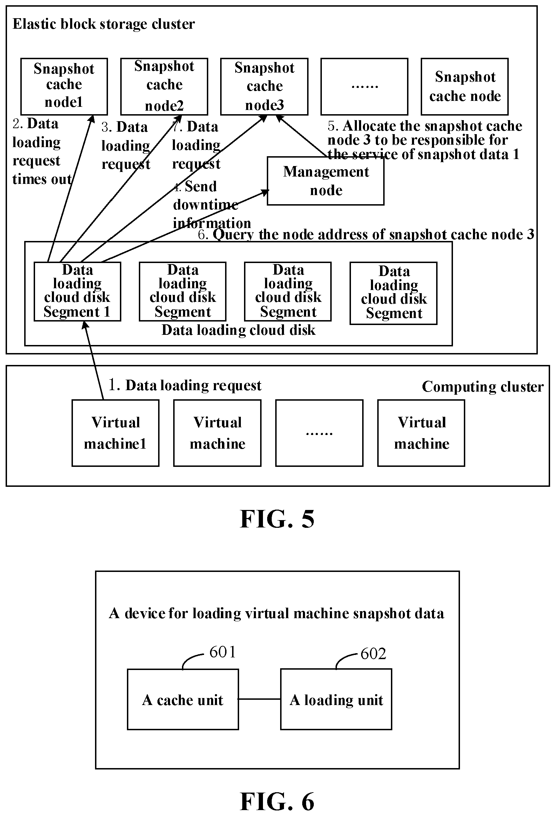

For example, as shown in FIG. 5, (1) The virtual machine of the computing cluster sends a data loading request to the data loading cloud disk segment 1 of the storage cluster. (2) It is overtime that the data loading cloud disk segment sends a data loading request to the snapshot cache node 1 (responsible for snapshot data 1). (3) In this case, the data loading cloud disk segment can send a data loading request to the snapshot cache node 2, so that the snapshot cache node 2 temporarily replaces the snapshot cache node 1 to be responsible for the service of snapshot data 1, and the data loading request of the data loading cloud disk is restored.

In the disclosed embodiment, when a snapshot cache node goes down, one snapshot cache node can be arbitrarily selected from other snapshot cache nodes among multiple snapshot cache nodes to provide services without waiting for the management node to reallocate a new snapshot cache node, thereby processing data loading requests sent by the cloud disk in a timely manner, greatly reducing data loading request burr (i.e., loading delays) caused by snapshot cache node downtime.

In some embodiments, the snapshot cache node with the smallest load pressure can also be selected from multiple snapshot cache nodes by the management node, and the failed first snapshot cache node is replaced with the snapshot cache node with the least load pressure. Optionally, the snapshot data required by the virtual machine includes multiple snapshot segments, and the node address of a snapshot cache node corresponds to a snapshot segment; the method also comprises: sending notification information that the first snapshot cache node has failed to the management node of multiple snapshot cache nodes through the data loading cloud disk corresponding to the virtual machine; selecting the target snapshot cache node with the smallest load pressure from multiple snapshot cache nodes through the management node, and allocating the first snapshot segment corresponding to the first snapshot cache node to the target snapshot cache node; and the data loading cloud disk corresponding to the virtual machine sends a data loading request to the target snapshot cache node, and loading the first snapshot segment required to start the virtual machine from the snapshot storage space of the target snapshot cache node.

In some embodiments, the first snapshot segment corresponding to the first snapshot cache node is allocated to the target snapshot cache node, comprising: obtaining the target node address corresponding to the target snapshot cache node through the management node, and associating and storing the target node address with the first snapshot segment; accordingly, the data loading request sent by the data loading cloud disk corresponding to the virtual machine to the target snapshot cache node includes: the data loading cloud disk corresponding to the virtual machine obtains the target node address corresponding to the first snapshot segment from the management node, and the data loading request sent to the target snapshot cache node through the target node address.

For example, as shown in FIG. 5, (4) Data loading cloud disk segment 1 reports the first snapshot cache node downtime event to the management node (SM). (5) The management node (SM) reallocates snapshot cache node 3 to be responsible for the service of snapshot data 1. (6) Data loading cloud disk segment 1 queries the management node (SM) for the new node address of snapshot data 1 (Strip1) (the node address of snapshot cache node 3). (7) Data loading cloud disk segment 1 sends a data loading request to snapshot cache node 3, allowing snapshot cache node 3 to replace snapshot cache node 1 to be responsible for the service of snapshot data 1, and the snapshot data distribution is restored to balance.

FIG. 6 is a schematic diagram of the structure of a device for loading virtual machine snapshot data provided in an embodiment of the present disclosure. As shown in FIG. 6, the device for loading virtual machine snapshot data comprises:

The cache unit 601, configured to select target image files corresponding to the multiple virtual machines from the multiple image files stored in the image center in response to receiving the startup instructions of the multiple virtual machines, and cache the multiple snapshot data in the target image files in the form of stripe data to the multiple snapshot cache nodes in the elastic block storage EBS cluster according to the preset first stripe size; wherein the EBS cluster is configured with a snapshot distributed cache formed by the multiple snapshot cache nodes to be responsible for caching and distributing the snapshot data;

The loading unit 602, configured to create a data loading cloud disk corresponding to each virtual machine, and for each virtual machine, load the snapshot data required to start the virtual machine from the snapshot storage space of the multiple snapshot cache nodes through the data loading cloud disk corresponding to the virtual machine.

According to one or more embodiments of the present disclosure, the loading unit 602, loads the snapshot data required to start the virtual machine from the snapshot storage space of the multiple snapshot cache nodes through the data loading cloud disk corresponding to the virtual machine, specifically comprising: sending a lazy loading data read request to the multiple snapshot cache nodes through the data loading cloud disk corresponding to the virtual machine, the lazy loading data read request carrying the logical address information of the snapshot data required to read to start the virtual machine; loading the snapshot data required to start the virtual machine from the snapshot storage space of the multiple snapshot cache nodes according to the logical address information through the data loading cloud disk corresponding to the virtual machine; and storing the snapshot data required by the virtual machine in the form of stripe data in the multiple data loading cloud disk segments of the data loading cloud disk according to a preset second stripe size.

According to one or more embodiments of the present disclosure, the loading unit 602 is also configured to create at least one snapshot copy storage cloud disk corresponding to the multiple virtual machines during the process of starting the multiple virtual machines; for each snapshot copy storage cloud disk, load the target image files corresponding to the multiple virtual machines from the snapshot storage space of the multiple snapshot cache nodes; and store the multiple snapshot data in the target image file in the form of stripe data in the multiple snapshot copy cloud disk segments of the snapshot copy storage cloud disk according to a preset second stripe size.

According to one or more embodiments of the present disclosure, the device also comprises: a configuration unit, which is used to configure the number of multiple snapshot copy cloud disk segments in the snapshot copy storage cloud disk to be consistent with the number of multiple data loading cloud disk segments in the data loading cloud disk; and to establish a data link between the snapshot copy storage cloud disk and the multiple data loading cloud disks, wherein the data link is used for the data loading cloud disk to read the snapshot data corresponding to the read and write request from the snapshot copy stored in the snapshot copy storage cloud disk when the data loading cloud disk receives the read and write request sent by the virtual machine.

According to one or more embodiments of the present disclosure, the loading unit 602 loads the snapshot data required to start the virtual machine from the snapshot storage space of the multiple snapshot cache nodes through the data loading cloud disk corresponding to the virtual machine, specifically comprising: if it is overtime that sending the data loading request to the first snapshot cache node through the data loading cloud disk corresponding to the virtual machine, then through the data loading request sent to the second snapshot cache node by the data loading cloud disk corresponding to the virtual machine, loading the snapshot data required to start the virtual machine from the snapshot storage space of the second snapshot cache node; wherein, the first snapshot cache node is a snapshot cache node that fails among the multiple snapshot cache nodes, and the second snapshot cache node is other snapshot cache nodes except the first snapshot cache node.

According to one or more embodiments of the present disclosure, the snapshot data required by the virtual machine includes multiple snapshot segments, and the node address of a snapshot cache node corresponds to one snapshot segment; the device also comprises: a scheduling unit, the scheduling unit is configured to send a notification message of a failure of the first snapshot cache node to the management node of the multiple snapshot cache nodes through the data loading cloud disk corresponding to the virtual machine; select the target snapshot cache node with the smallest load pressure from the multiple snapshot cache nodes through the management node, and allocate the first snapshot segment corresponding to the first snapshot cache node to the target snapshot cache node; and a data loading request sent by the data loading cloud disk corresponding to the virtual machine to the target snapshot cache node, load the first snapshot segment required to start the virtual machine from the snapshot storage space of the target snapshot cache node.

According to one or more embodiments of the present disclosure, the scheduling unit allocates the first snapshot segment corresponding to the first snapshot cache node to the target snapshot cache node, specifically comprising: obtaining the target node address corresponding to the target snapshot cache node through the management node, and associating and storing the target node address with the first snapshot segment; accordingly, the data loading request sent by the data loading cloud disk corresponding to the virtual machine to the target snapshot cache node includes: the data loading cloud disk corresponding to the virtual machine obtains the target node address corresponding to the first snapshot segment from the management node, and the data loading request sent to the target snapshot cache node through the target node address.

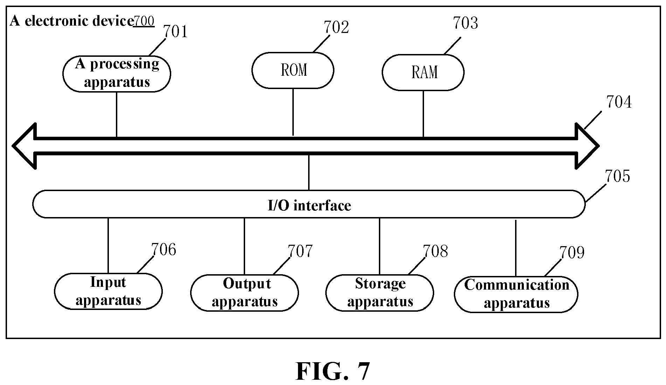

Referring to FIG. 7, it shows a schematic diagram of the structure of an electronic device 700 suitable for implementing the embodiment of the present disclosure, and the electronic device 700 may be a terminal device or a server. Among them, the terminal device may include but is not limited to mobile terminals such as mobile phones, laptop computers, digital broadcast receivers, personal digital assistants (PDAs), tablet computers (Portable Android Devices, PADs), portable multimedia players (Portable Media Players, PMPs), vehicle-mounted terminals (such as vehicle-mounted navigation terminals), etc., and fixed terminals such as digital TVs, desktop computers, etc. The electronic device shown in FIG7 is only an example and should not bring any limitation to the functions and scope of use of the embodiment of the present disclosure.

As shown in FIG. 7, the electronic device 700 may include a processing apparatus (e.g., a central processing unit, a graphics processing unit, etc.) 701, which may perform various appropriate actions and processes according to a program stored in a read-only memory (ROM) 702 or a program loaded from a storage apparatus 708 to a random access memory (RAM) 703. Various programs and data required for the operation of the electronic device 700 are also stored in the RAM 703. The processing apparatus 701, the ROM 702, and the RAM 703 are connected to each other via a bus 704. An input/output (I/O) interface 705 is also connected to the bus 704.

Typically, the following apparatus may be connected to the I/O interface 705: input apparatus 706 including, for example, a touch screen, a touchpad, a keyboard, a mouse, a camera, a microphone, an accelerometer, a gyroscope, etc.; output apparatus 707 including, for example, a liquid crystal display (LCD), a speaker, a vibrator, etc.; storage apparatus 708 including, for example, a magnetic tape, a hard disk, etc.; and communication apparatus 709. The communication apparatus 709 may allow the electronic device 700 to communicate with other devices wirelessly or by wire to exchange data. Although FIG. 7 shows an electronic device 700 with various apparatus, it should be understood that it is not required to implement or have all the apparatus shown. More or fewer devices may be implemented or have alternatively.

In particular, according to an embodiment of the present disclosure, the process described above with reference to the flowchart can be implemented as a computer software program. For example, an embodiment of the present disclosure includes a computer program product, which includes a computer program carried on a computer-readable medium, and the computer program includes a program code for executing the method shown in the flowchart. In such an embodiment, the computer program can be downloaded and installed from a network through a communication apparatus 709, or installed from a storage apparatus 708, or installed from a ROM 702. When the computer program is executed by the processing apparatus 701, the above-mentioned functions defined in the method of the embodiment of the present disclosure are executed.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, device or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. Computer readable signal media may also be any computer readable medium other than computer readable storage media, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being installed in the electronic device.

The computer-readable medium carries one or more programs. When the one or more programs are executed by the electronic device, the electronic device executes the method shown in the above embodiment.

Computer program code for performing the operations of the present disclosure may be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer via any type of network, including a local area network (LAN) or a wide area network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each square box in the flow chart or block diagram can represent a module, a program segment or a part of a code, and the module, the program segment or a part of the code contains one or more executable instructions for realizing the specified logical function. It should also be noted that in some implementations as replacements, the functions marked in the square box can also occur in a sequence different from that marked in the accompanying drawings. For example, two square boxes represented in succession can actually be executed substantially in parallel, and they can sometimes be executed in the opposite order, depending on the functions involved. It should also be noted that each square box in the block diagram and/or flow chart, and the combination of the square boxes in the block diagram and/or flow chart can be implemented with a dedicated hardware-based system that performs a specified function or operation, or can be implemented with a combination of dedicated hardware and computer instructions.

The units involved in the embodiments described in the present disclosure may be implemented by software or hardware. The name of a unit does not limit the unit itself in some cases. For example, the first acquisition unit may also be described as "a unit for acquiring at least two Internet Protocol addresses".

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that may contain or store a program for use by or in conjunction with an instruction execution system, device, or equipment. A machine-readable medium may be a machine-readable signal medium or a machine-readable storage medium. A machine-readable medium may include, but is not limited to, an electronic, magnetic, optical, electromagnetic, infrared, or semiconductor system, device, or device, or any suitable combination of the foregoing. A more specific example of a machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

In a first aspect, according to one or more embodiments of the present disclosure, a method for loading virtual machine snapshot data is provided, comprising:
in response to receiving the startup instructions of multiple virtual machines, selecting target image files corresponding to the multiple virtual machines from the multiple image files stored in the image center, and creating multiple snapshot data in the target image files in the form of stripe data to multiple snapshot cache nodes in the elastic block storage EBS cluster according to a preset first stripe size; wherein the EBS cluster is configured with a snapshot distributed cache formed by multiple snapshot cache nodes to be responsible for caching and distributing snapshot data; and
creating a data loading cloud disk corresponding to each virtual machine, and for each virtual machine, loading the snapshot data required to start the virtual machine from the snapshot storage space of the multiple snapshot cache nodes through the data loading cloud disk corresponding to the virtual machine.

According to one or more embodiments of the present disclosure, loading the snapshot data required to start the virtual machine from the snapshot storage space of the multiple snapshot cache nodes through the data loading cloud disk corresponding to the virtual machine, comprising: sending a lazy loading data read request to the multiple snapshot cache nodes through the data loading cloud disk corresponding to the virtual machine, the lazy loading data read request carrying the logical address information of the snapshot data required to read for starting the virtual machine; loading the snapshot data required to start the virtual machine from the snapshot storage space of the multiple snapshot cache nodes according to the logical address information through the data loading cloud disk corresponding to the virtual machine; and storing the snapshot data required by the virtual machine in the form of stripe data in the multiple data loading cloud disk segments of the data loading cloud disk according to a preset second stripe size.

According to one or more embodiments of the present disclosure, the method also comprises: in the process of starting the multiple virtual machines, creating at least one snapshot copy storage cloud disk corresponding to the multiple virtual machines; for each snapshot copy storage cloud disk, loading the target image files corresponding to the multiple virtual machines from the snapshot storage space of the multiple snapshot cache nodes; and according to a preset second stripe size, storing the multiple snapshot data in the target image file in the form of stripe data in the multiple snapshot copy cloud disk segments of the snapshot copy storage cloud disk.

According to one or more embodiments of the present disclosure, the method also comprises: configuring the number of multiple snapshot copy cloud disk segments in the snapshot copy storage cloud disk to be consistent with the number of multiple data loading cloud disk segments in the data loading cloud disk; and establishing a data link between the snapshot copy storage cloud disk and the multiple data loading cloud disks, wherein the data link is used for the data loading cloud disk to read the snapshot data corresponding to the read and write request from the snapshot copy stored in the snapshot copy storage cloud disk when the data loading cloud disk receives the read and write request sent by the virtual machine.

According to one or more embodiments of the present disclosure, loading snapshot data required to start the virtual machine from the snapshot storage space of the multiple snapshot cache nodes through the data loading cloud disk corresponding to the virtual machine comprises: if it is overtime that send a data loading request to a first snapshot cache node through the data loading cloud disk corresponding to the virtual machine, then through a data loading request sent to a second snapshot cache node through the data loading cloud disk corresponding to the virtual machine, loading the snapshot data required to start the virtual machine from the snapshot storage space of the second snapshot cache node; wherein the first snapshot cache node is a snapshot cache node that fails among the multiple snapshot cache nodes, and the second snapshot cache node is other snapshot cache node except the first snapshot cache node.

According to one or more embodiments of the present disclosure, the snapshot data required by the virtual machine includes multiple snapshot segments, and the node address of a snapshot cache node corresponds to a snapshot segment; the method also comprises: sending notification information of the failure of the first snapshot cache node to the management node of the multiple snapshot cache nodes through the data loading cloud disk corresponding to the virtual machine; selecting the target snapshot cache node with the smallest load pressure from the multiple snapshot cache nodes through the management node, and allocating the first snapshot segment corresponding to the first snapshot cache node to the target snapshot cache node; the data loading request sent by the data loading cloud disk corresponding to the virtual machine to the target snapshot cache node, loading the first snapshot segment required to start the virtual machine from the snapshot storage space of the target snapshot cache node.

According to one or more embodiments of the present disclosure, allocating the first snapshot segment corresponding to the first snapshot cache node to the target snapshot cache node comprises: obtaining the target node address corresponding to the target snapshot cache node through the management node, and associating and storing the target node address with the first snapshot segment; accordingly, the data loading request sent by the data loading cloud disk corresponding to the virtual machine to the target snapshot cache node includes: the data loading cloud disk corresponding to the virtual machine obtains the target node address corresponding to the first snapshot segment from the management node, and the data loading request sent to the target snapshot cache node through the target node address.

In a second aspect, according to one or more embodiments of the present disclosure, a device for loading virtual machine snapshot data is provided, comprising:
a cache unit, configured to, in response to receiving startup instructions of multiple virtual machines, select target image files corresponding to the multiple virtual machines from multiple image files stored in an image center, and cache multiple snapshot data in the target image files in the form of stripe data to multiple snapshot cache nodes in an elastic block storage EBS cluster according to a preset first stripe size; wherein the EBS cluster is configured with a snapshot distributed cache formed by multiple snapshot cache nodes to be responsible for caching and distributing snapshot data; and
a loading unit, configured to create a data loading cloud disk corresponding to each virtual machine, and for each virtual machine, load the snapshot data required to start the virtual machine from the snapshot storage space of the multiple snapshot cache nodes through the data loading cloud disk corresponding to the virtual machine.

According to one or more embodiments of the present disclosure, the loading unit loads the snapshot data required to start the virtual machine from the snapshot storage space of the multiple snapshot cache nodes through the data loading cloud disk corresponding to the virtual machine, specifically comprising: sending a lazy loading data read request to the multiple snapshot cache nodes through the data loading cloud disk corresponding to the virtual machine, the lazy loading data read request carrying the logical address information of the snapshot data required to read for starting the virtual machine; loading the snapshot data required to start the virtual machine from the snapshot storage space of the multiple snapshot cache nodes according to the logical address information through the data loading cloud disk corresponding to the virtual machine; and storing the snapshot data required by the virtual machine in the form of stripe data in the multiple data loading cloud disk segments of the data loading cloud disk according to a preset second stripe size.

According to one or more embodiments of the present disclosure, the loading unit is also configured to create at least one snapshot copy storage cloud disk corresponding to the multiple virtual machines during the process of starting the multiple virtual machines; for each snapshot copy storage cloud disk, load the target image files corresponding to the multiple virtual machines from the snapshot storage space of the multiple snapshot cache nodes; and store the multiple snapshot data in the target image file in the form of stripe data in the multiple snapshot copy cloud disk segments of the snapshot copy storage cloud disk according to a preset second stripe size.

According to one or more embodiments of the present disclosure, the device also comprises: a configuration unit, which is used to configure the number of multiple snapshot copy cloud disk segments in the snapshot copy storage cloud disk to be consistent with the number of multiple data loading cloud disk segments in the data loading cloud disk; and to establish a data link between the snapshot copy storage cloud disk and the multiple data loading cloud disks, wherein the data link is used for the data loading cloud disk to read the snapshot data corresponding to the read and write request from the snapshot copy stored in the snapshot copy storage cloud disk when the data loading cloud disk receives the read and write request sent by the virtual machine.

According to one or more embodiments of the present disclosure, the loading unit loads the snapshot data required to start the virtual machine from the snapshot storage space of the multiple snapshot cache nodes through the data loading cloud disk corresponding to the virtual machine, specifically comprising: if it is overtime that sending the data loading request to the first snapshot cache node through the data loading cloud disk corresponding to the virtual machine, then through the data loading request sent to the second snapshot cache node by the data loading cloud disk corresponding to the virtual machine, loading the snapshot data required to start the virtual machine from the snapshot storage space of the second snapshot cache node; wherein, the first snapshot cache node is a snapshot cache node that fails among the multiple snapshot cache nodes, and the second snapshot cache node is other snapshot cache nodes except the first snapshot cache node.

According to one or more embodiments of the present disclosure, the snapshot data required by the virtual machine includes multiple snapshot segments, and the node address of a snapshot cache node corresponds to a snapshot segment; the device also comprises: a scheduling unit, the scheduling unit is configured to send a notification information of the failure of the first snapshot cache node to the management node of the multiple snapshot cache nodes through the data loading cloud disk corresponding to the virtual machine; select the target snapshot cache node with the smallest load pressure from the multiple snapshot cache nodes through the management node, and allocate the first snapshot segment corresponding to the first snapshot cache node to the target snapshot cache node; and a data loading request sent by the data loading cloud disk corresponding to the virtual machine to the target snapshot cache node, load the first snapshot segment required to start the virtual machine from the snapshot storage space of the target snapshot cache node.

According to one or more embodiments of the present disclosure, the scheduling unit allocates the first snapshot segment corresponding to the first snapshot cache node to the target snapshot cache node, specifically comprising: obtaining the target node address corresponding to the target snapshot cache node through the management node, and associating and storing the target node address with the first snapshot segment; accordingly, the data loading request sent by the data loading cloud disk corresponding to the virtual machine to the target snapshot cache node includes: the data loading cloud disk corresponding to the virtual machine obtains the target node address corresponding to the first snapshot segment from the management node, and the data loading request sent to the target snapshot cache node through the target node address.

In a third aspect, according to one or more embodiments of the present disclosure, an electronic device is provided, comprising: at least one processor and a memory;
the memory stores computer-executable instructions;
the at least one processor executes the computer-executed instructions stored in the memory, so that the at least one processor executes the loading method of virtual machine snapshot data as described in the first aspect and various possible designs of the first aspect.

In a fourth aspect, according to one or more embodiments of the present disclosure, a computer-readable storage medium is provided, wherein the computer-readable storage medium stores computer execution instructions, the computer execution instructions, when executed by a processor, implements the method for loading virtual machine snapshot data as described in the first aspect and various possible designs of the first aspect.

In a fifth aspect, according to one or more embodiments of the present disclosure, a computer program product is provided, comprising a computer program, when executed by a processor, implements the method for loading virtual machine snapshot data as described in the first aspect and various possible designs of the first aspect.

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, the above features are replaced with the technical features with similar functions disclosed in the present disclosure (but not limited to) by each other to form a technical solution.

In addition, although each operation is described in a specific order, this should not be understood as requiring these operations to be performed in the specific order shown or in a sequential order. Under certain circumstances, multitasking and parallel processing may be advantageous. Similarly, although some specific implementation details are included in the above discussion, these should not be interpreted as limiting the scope of the present disclosure. Some features described in the context of a separate embodiment can also be implemented in a single embodiment in combination. On the contrary, the various features described in the context of a single embodiment can also be implemented in multiple embodiments individually or in any suitable sub-combination mode.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for loading virtual machine snapshot data, comprising:
in response to receiving startup instructions of multiple virtual machines, selecting (S201) a target image file corresponding to the multiple virtual machines from multiple image files stored in an image center, and caching multiple snapshot data in the target image file in a form of stripe data to multiple snapshot cache nodes in an elastic block storage EBS cluster according to a preset first stripe size; wherein the EBS cluster is configured with a snapshot distributed cache formed by multiple snapshot cache nodes to be responsible for caching and distributing snapshot data; and
creating (S202) a data loading cloud disk corresponding to each virtual machine, and for each virtual machine, loading the snapshot data required to start the virtual machine from a snapshot storage space of the multiple snapshot cache nodes through the data loading cloud disk corresponding to the virtual machine.

2. The method according to claim 1, wherein loading the snapshot data required to start the virtual machine from the snapshot storage space of the plurality of snapshot cache nodes through the data loading cloud disk corresponding to the virtual machine comprises:
sending (S401) a lazy loading data read request to the multiple snapshot cache nodes through the data loading cloud disk corresponding to the virtual machine, wherein the lazy loading data read request carries logical address information of the snapshot data required to be read to start the virtual machine;
loading (S402) the snapshot data required to start the virtual machine from the snapshot storage space of the multiple snapshot cache nodes according to the logical address information through the data loading cloud disk corresponding to the virtual machine; and
according to a preset second stripe size, storing (S403) the snapshot data required by the virtual machine in the form of stripe data in multiple data loading cloud disk segments of the data loading cloud disk.

3. The method according to claim 2, wherein the method further comprises:
in a process of starting the multiple virtual machines, creating at least one snapshot copy storage cloud disk corresponding to the multiple virtual machines;
for each snapshot copy storage cloud disk, loading the target image file corresponding to the multiple virtual machines from the snapshot storage space of the multiple snapshot cache nodes; and
according to the preset second stripe size, storing a plurality of snapshot data in the target image file in the form of stripe data in multiple snapshot copy cloud disk segments of the snapshot copy storage cloud disk.

4. The method according to claim 3, wherein the method further comprises:
configuring a number of multiple snapshot copy cloud disk segments in the snapshot copy storage cloud disk to be consistent with a number of multiple data loading cloud disk segments in the data loading cloud disk; and
establishing a data link between a snapshot copy storage cloud disk and multiple data loading cloud disks, wherein the data link is used for the data loading cloud disk to read the snapshot data corresponding to a read and write request from the snapshot copy stored in the snapshot copy storage cloud disk in response to the data loading cloud disk receiving the read and write request sent by the virtual machine.

5. The method according to claim 1, wherein loading the snapshot data required to start the virtual machine from the snapshot storage space of the multiple snapshot cache nodes through the data loading cloud disk corresponding to the virtual machine comprises:
in response to determining that it is overtime to send a data loading request sent to a second snapshot cache node through the data loading cloud disk corresponding to the virtual machine, loading the snapshot data required to start the virtual machine from the snapshot storage space of the second snapshot cache node through the data loading request sent to the second snapshot cache node by the data loading cloud disk corresponding to the virtual machine;
wherein the first snapshot cache node is a snapshot cache node that fails among the multiple snapshot cache nodes, and the second snapshot cache node is other snapshot cache node except the first snapshot cache node.

6. The method according to claim 5, wherein the snapshot data required by the virtual machine includes a plurality of snapshot segments, and a node address of a snapshot cache node corresponds to a snapshot segment; the method further comprises:
sending, by the data loading cloud disk corresponding to the virtual machine, a notification message of a failure of the first snapshot cache node to a management node of the multiple snapshot cache nodes;
selecting, by the management node, a target snapshot cache node with minimum load pressure from the multiple snapshot cache nodes, and allocating a first snapshot segment corresponding to the first snapshot cache node to the target snapshot cache node; and
loading, by the data loading request sent to the target snapshot cache node through the data loading cloud disk corresponding to the virtual machine, the first snapshot segment required to start the virtual machine from the snapshot storage space of the target snapshot cache node.

7. The method according to claim 6, wherein the allocating the first snapshot segment corresponding to the first snapshot cache node to the target snapshot cache node comprises:
obtaining a target node address corresponding to the target snapshot cache node through the management node, and associating and storing the target node address with the first snapshot segment; and
correspondingly, the data loading request sent by the data loading cloud disk corresponding to the virtual machine to the target snapshot cache node includes: the data loading cloud disk corresponding to the virtual machine obtains the target node address corresponding to the first snapshot segment from the management node, and the data loading request sent to the target snapshot cache node through the target node address.

8. A device for loading virtual machine snapshot data, comprising:
a cache unit (601), configured to, in response to receiving startup instructions of multiple virtual machines, select a target image file corresponding to the multiple virtual machines from multiple image files stored in an image center, and cache multiple snapshot data in the target image file in a form of stripe data to multiple snapshot cache nodes in an elastic block storage EBS cluster according to a preset first stripe size; wherein the EBS cluster is configured with a snapshot distributed cache formed by the multiple snapshot cache nodes to be responsible for caching and distributing snapshot data; and
a loading unit (602), configured to create a data loading cloud disk corresponding to each virtual machine, and for each virtual machine, load the snapshot data required to start the virtual machine from a snapshot storage space of the multiple snapshot cache nodes through the data loading cloud disk corresponding to the virtual machine.

9. An electronic device, comprising: a processor and a memory; wherein
the memory stores computer-executable instructions;
the processor executes the computer-executable instructions stored in the memory, causing the processor to execute the method for loading virtual machine snapshot data according to any of claims 1 to 7.

10. A computer-readable storage medium, wherein the computer-readable storage medium stores computer-executable instructions, and the computer-executable instructions, when executed by a processor, implements the method for loading virtual machine snapshot data according to any of claims 1 to 7.

11. A computer program product, comprising a computer program, wherein the computer program, when executed by a processor, implements the method for loading virtual machine snapshot data according to any of claims 1 to 7.
